# FASCICULE DE BREVET EUROPEEN

(11) **EP 1 069 023 B1**
(45) Date de publication et mention de la délivrance du brevet: **26.01.2005**
(21) Numéro de dépôt: 00401787.7
(22) Date de dépôt: 22.06.2000
(51) Int. Cl.: B62D 1/06

(54) **Volant de direction de véhicule**
Kraftfahrzeuglenkrad
Motor vehicle steering wheel

(30) Priorité: 13.07.1999 FR 9909094
(43) Date de publication de la demande: 17.01.2001
(73) Titulaire: AUTOLIV DEVELOPMENT AB, 107 24 Stockholm (SE)
(72) Inventeur: Guyader, Renaud, 86000 Poitiers (FR)
(74) Mandataire: Santarelli

(56) Documents cités:
- DE-U- 8 906 358
- FR-A- 2 744 976
- GB-A- 1 398 685
- US-A- 2 943 164
- PATENT ABSTRACTS OF JAPAN vol. 017, no. 343 (M-1436), 29 juin 1993 (1993-06-29) -& JP 05 042876 A (TOYODA GOSEI CO LTD), 23 février 1993 (1993-02-23)
- PATENT ABSTRACTS OF JAPAN vol. 016, no. 161 (M-1237), 20 avril 1992 (1992-04-20) -& JP 04 011569 A (TOYODA GOSEI CO LTD), 16 janvier 1992 (1992-01-16)

## Description

L'invention a trait aux volants de direction de véhicule gainés d'un revêtement en cuir ou analogue, au moins sur la jante.

On sait que l'assemblage de ce revêtement sur le reste du volant s'effectue par une couture réalisée directement sur le volant, disposée du côté interne de la jante pour que le conducteur qui a en mains le volant ne soit pas gêné par la saillie que constitue cette couture.

On connaît déjà les caractéristiques du préambule de la revendication 1 par le brevet japonais 04 011569 A. Ce document décrit un volant de direction de véhicule, comportant une jante formée par une armature, par un enrobage de ladite armature et par un revêtement en cuir ou analogue gainant ledit enrobage, celui-ci comportant un élément d'un seul tenant, dans lequel est ménagée une rainure périphérique dans laquelle est engagée une bordure longitudinale dudit revêtement.

L'invention vise à améliorer les conditions de mise en place du revêtement.

Elle propose à cet effet un volant de direction de véhicule, comportant une jante formée par une armature, par un enrobage de ladite armature et par un revêtement en cuir ou analogue gainant ledit enrobage, celui-ci comportant un élément d'un seul tenant dans lequel est ménagée une rainure périphérique dans laquelle est engagée une bordure longitudinale dudit revêtement ; caractérisé en ce que ledit enrobage de l'armature de la jante se prolonge, au niveau des branches que comporte ledit volant, par un enrobage de l'armature desdites branches, tandis que ledit revêtement comporte des pièces pour gainer également l'enrobage de chaque dite branche.

Ainsi, plutôt que de se faire entièrement par couture, l'assujettissement du revêtement sur le reste du volant peut s'effectuer, au moins partiellement, par simple engagement dans une rainure de l'enrobage, d'une bordure longitudinale du revêtement, c'est-à-dire d'une bande de celui-ci située le long d'une extrémité longitudinale libre, ce qui est beaucoup plus simple et rapide à réaliser que l'opération de couture conventionnelle.

La rainure, qui est bien sûr orientée transversalement à la surface de l'enrobage, pour plonger dans celui-ci, du fait qu'elle est ménagée dans un élément d'un seul tenant, procure un maintien qui, à la différence d'une mâchoire, n'est pas commandé mais intrinsèque à l'élément d'un seul tenant dans lequel est ménagée cette rainure, ce qui est particulièrement simple à réaliser, et, ainsi que l'ont montré les essais réalisés par la demanderesse, convient tout à fait pour réaliser, au moins partiellement, l'assujettissement recherché du revêtement sur le volant.

L'engagement d'au moins une bordure du revêtement dans une rainure de l'enrobage, offre en outre l'avantage d'éviter que la réunion des bords opposés du revêtement ne produise une saillie gênante pour l'utilisateur, puisque le surplus de matière, y compris une éventuelle couture entre deux bordures, réalisée, par exemple, à plat avant la pose sur le volant, se retrouve dans l'épaisseur de l'enrobage, la rainure pouvant ainsi être positionnée librement sur la jante, y compris à l'avant ou sur le côté externe.

De préférence, pour des raisons de simplicité et de commodité :
- le revêtement comporte, au niveau d'au moins une dite branche, une pièce en T dont l'une des bordures d'extrémité est engagée dans une dite rainure périphérique tandis qu'au moins une autre bordure d'extrémité est engagée dans une rainure additionnelle ménagée dans l'enrobage de la jante et dans l'enrobage de cette branche ; et éventuellement
- ladite rainure additionnelle se raccorde à la rainure périphérique dans laquelle est engagée l'une des bordures d'extrémité de la pièce en T.

Selon des caractéristiques préférées, pour des raisons de simplicité et de commodité de fabrication, ledit enrobage est en un seul élément, surmoulé sur ladite armature, par exemple en mousse de polyuréthane ou en thermoplastique injectée gaz.

Dans un premier mode de réalisation préféré, particulièrement simple, deux bordures opposées du revêtement sont engagées dans ladite rainure.

Dans un deuxième mode de réalisation préféré, offrant de nombreuses possibilités tant décoratives que fonctionnelles, ledit enrobage comporte une deuxième rainure parallèle à ladite rainure, chacune des bordures opposées dudit revêtement étant engagée dans une respective desdites première rainure et deuxième rainure.

Selon des caractéristiques préférées de ce mode de réalisation, le volant comporte un profilé à section en U, dont l'une des ailes latérales est engagée, avec l'une desdites bordures opposées, dans la première rainure, dont l'autre aile latérale est engagée, avec l'autre desdites bordures opposées, dans la deuxième rainure, et dont l'aile centrale est à cheval entre lesdites première rainure et deuxième rainure.

Ce profilé sert à la fois à maintenir les bordures du revêtement dans les rainures, grâce à ses ailes latérales, et, le cas échéant, à la fonctionnalité et à la décoration du volant, grâce à l'aile centrale, qui est visible.

Selon d'autres caractéristiques préférées, la surface externe de l'aile centrale du profilé est à fleur de la surface externe du revêtement.

Le profilé n'introduit ainsi aucune saillie gênante pour le conducteur.

Selon d'autres caractéristiques préférées, le volant comporte des moyens électriques disposés entre ledit profilé et ledit enrobage.

On tire ainsi parti de l'existence du profilé pour munir commodément la jante du volant de moyens électriques, ceux-ci comportant par exemple au moins une source lumineuse, l'aile centrale comportant en conséquence au moins une portion perméable à la lumière et/ou par exemple au moins un moyen d'établissement de contact.

Selon d'autres caractéristiques préférées du deuxième mode de réalisation, ledit enrobage présente, entre lesdites première rainure et deuxième rainure, sur au moins une longueur périphérique prédéterminée, une surface externe en creux par rapport au reste de la surface externe de l'enrobage, afin de ménager, entre ledit enrobage et ledit profilé, un espace où loger des dits moyens électriques.

Selon d'autres caractéristiques préférées, d'une façon générale, au moins une dite rainure est issue de moulage et/ou est réalisée en reprise d'usinage après moulage dudit enrobage. Selon une autre caractéristique préférée, pour obtenir un assujettissement de qualité, ledit revêtement est collé sur ledit enrobage.

L'exposé de l'invention sera maintenant poursuivi par la description d'exemples de réalisation de l'invention, donnée ci-après à titre illustratif et non limitatif, en référence aux dessins annexés. Sur ceux-ci :
- la figure 1 est une vue en plan d'un volant de direction de véhicule conforme à l'invention ;
- la figure 2 est la vue en élévation-coupe repérée par II-II sur la figure 1 ;
- les figures 3 et 4 sont des vues de même nature que les figures 1 et 2, respectivement, pour un autre exemple de réalisation ; et
- les figures 5 et 6 illustrent de façon schématique des moyens électriques dont est muni le volant montré sur les figures 3 et 4.

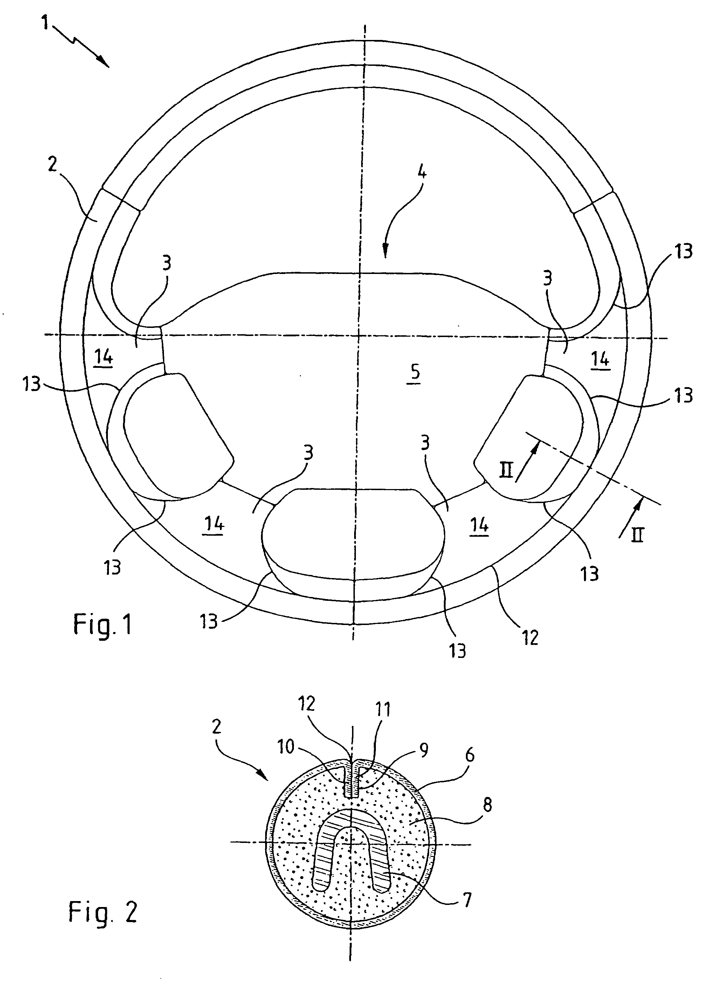

Le volant de direction 1 illustré sur la figure 1 comporte une jante 2 reliée, par quatre courtes branches 3, à un moyeu central 4 muni d'un module airbag coiffé par un couvercle 5, la jante 2 et les branches 3 étant gainées par un revêtement en cuir 6.

Ainsi qu'on le voit sur la figure 2, la jante 2 comporte une armature métallique 7 à section en U noyée dans un enrobage 8 en mousse de polyuréthane dans lequel est pratiquée une rainure 9, venue de moulage, orientée radialement, les deux bordures opposées 10 et 11 du revêtement 6 étant toutes deux engagées dans la rainure 9, le revêtement 6 étant collé sur l'enrobage 8.

Ce dernier se prolonge, au niveau des branches 3, par un enrobage de l'armature de ces dernières, qui est également gainé par le revêtement 6.

La rainure 9, et donc la ligne 12 de jonction en surface des bordures 10 et 11, s'étend sur la totalité de la périphérie de la jante 2, l'enrobage de chacune des branches 3 présentant deux rainures additionnelles, auxquelles correspondent les lignes de jonction 13 visibles sur la figure 1, le revêtement 6 comportant pour chaque branche 3, une pièce 14 en forme de T dont la portion située entre les lignes 12 et 13 est visible sur la figure 1.

Avant mise en place autour de l'enrobage 8, le revêtement 6 présente, à l'état plat, une forme générale annulaire d'une largeur correspondante à la circonférence de l'enrobage 8, au niveau de la jante 2, additionnée de deux fois la profondeur de la rainure 9. Il résulte de la réunion, par des coutures transversales, de trois morceaux de cuir prévus respectivement pour la partie de la jante que l'on voit en haut sur la figure 1 et pour les deux autres parties qui complètent le pourtour, respectivement à droite et à gauche, ces deux dernières parties comportant, d'un côté, une portion en saillie pour chacune des branches 3 tandis que de l'autre côté sont cousues les pièces 14, le long de ce que qui devient, lorsque le revêtement est mis en place, la ligne 12.

La gainage du volant 1 s'effectue en insérant, dans la rainure 9, les deux bordures 10 et 11, sauf au niveau des branches 3 où la bordure 10 est remplacée par la bordure correspondante de la pièce 14 située au niveau de la ligne 12, tandis que, dans les rainures correspondant aux lignes 13, sont insérées l'une des deux autres bordures de la pièce 14 et la bordure longitudinale 10.

Le fait que les lignes de jonction 12 et 13 soient sur la face avant du volant 1 n'introduit pas de gêne pour l'utilisateur, ces lignes étant globalement à fleur du reste de la surface externe du revêtement.

On notera que la possibilité qu'offre l'invention de disposer librement les lignes de jonction telles que 12 et 13, permet de jouer sur celles-ci pour créer des effets décoratifs.

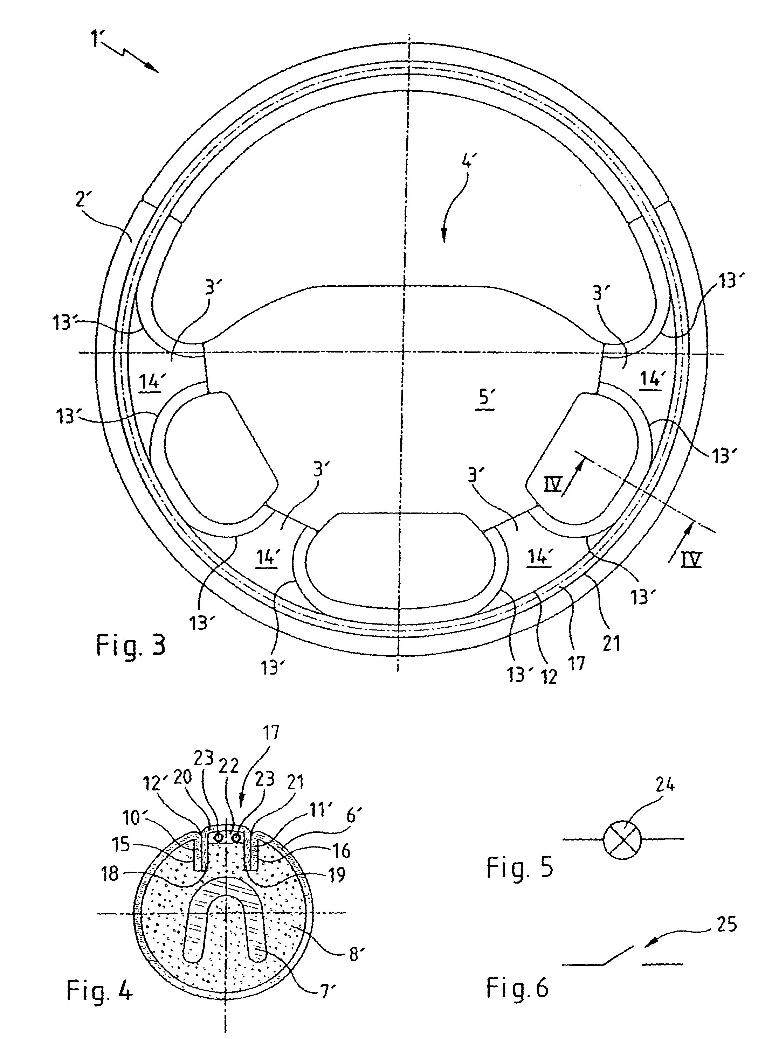

Le volant 1' illustré sur les figures 3 et 4 est d'une façon générale similaire au volant 1, si ce n'est que la rainure périphérique 9 est remplacée par deux rainures périphériques 15 et 16 parallèles l'une à l'autre et que le revêtement 6 est remplacé par un revêtement 6' et par un profilé 17, étant également précisé que les pièces en T 14' du revêtement 6' sont toutes identiques, contrairement aux pièces 14, dont la forme est différente respectivement pour les branches 3 que l'on voit en bas et pour les branches 3 que l'on voit en haut.

D'une façon générale, on a employé pour le volant 1' les mêmes références numériques que pour le volant 1, mais affectées d'un indice '.

Le profilé 17 est annulaire et en matière relativement rigide, ici en matière plastique, et présente, comme on le voit sur la figure 4, une section en U dont l'aile latérale 18 est engagée, avec la bordure 10' du revêtement 6', dans la rainure 15, et dont l'autre aile latérale 19 est engagée, avec la bordure 11' du revêtement 6', dans la rainure 16, l'aile centrale du profilé 20 étant à cheval entre les rainures 15 et 16, la surface externe de l'aile centrale 20, longée par les lignes de jonction 12' et 21, étant à fleur de la surface externe du revêtement 6'.

L'enrobage 8' comporte, entre les rainures 15 et 16, ici sur la totalité de la périphérie de la jante 2', une surface externe qui est en creux par rapport au reste de la surface externe de l'enrobage 8', afin de ménager, entre l'enrobage 8' et le profilé 17, un espace 22 dans lequel sont disposés des moyens électriques, en l'occurrence, au niveau de la coupe illustrée sur la figure 4, des câbles 23 et, à d'autres emplacements, une source lumineuse 24 (figure 5), l'aile centrale 20 du profilé 17 étant à son niveau perméable à la lumière et, à un autre emplacement, un élément 25 de contact électrique (figure 6), qu'on actionne en appuyant sur le profilé 17, grâce à la souplesse de l'enrobage 8', et, éventuellement, grâce à un assouplissement local de l'aile centrale 20.

Dans l'exemple illustré, le volant 1' comporte en fait plusieurs sources lumineuses 24, dont certaines ont une fonction esthétique et/ou d'éclairage, tandis que les autres servent de voyant témoin, notamment d'alerte de niveau d'huile bas ou d'usure des freins ; et de même plusieurs éléments de contact 25 sont prévus, pour commander différents éléments du véhicule, dont l'avertisseur.

Dans des variantes non illustrées, la rainure 9 ou les rainures 15 et 16, plutôt que de venir de moulage, sont obtenues, au moins partiellement, en reprise d'usinage ; le profilé 17 n'est prévu que sur une portion de la périphérie de la jante 2' ; et/ou l'enrobage est en thermoplastique injecté gaz plutôt qu'en mousse de polyuréthane.

## Revendications

1. Volant de direction (1) de véhicule, comportant une jante (2 ; 2') formée par une armature (7 ; 7'), par un enrobage (8 ; 8') de ladite armature (7, 7') et par un revêtement (6 ; 6') en cuir ou analogue gainant ledit enrobage (8, 8'), l'enrobage comportant un élément (8 ; 8') d'un seul tenant dans lequel est ménagée une rainure périphérique (9 ; 15, 16) dans laquelle est engagée une bordure longitudinale (10, 11; 10', 11') dudit revêtement (6, 6'), **caractérisé en en ce que** ledit enrobage (8 ; 8') de l'armature (7 ; 7') de la jante (2 ; 2') se prolonge, au niveau des branches (3 ; 3') que comporte ledit volant (1), par un enrobage (8, 8') de l'armature (7,7') desdites branches (3, 3'), tandis que ledit revêtement (6, 6') comporte des pièces (14 ; 14') pour gainer également l'enrobage (8, 8') de chaque dite branche (3 ; 3').

2. Volant selon la revendication 1, **caractérisé en ce que** ledit revêtement comporte, au niveau d'au moins une dite branche (3 ; 3'), une pièce (14 ; 14') en T dont l'une des bordures d'extrémité est engagée dans une dite rainure périphérique (12 ; 12') tandis qu'au moins une autre bordure d'extrémité est engagée dans une rainure additionnelle ménagée dans l'enrobage de la jante et dans l'enrobage de cette branche.

3. Volant selon la revendication 2, **caractérisé en ce que** ladite rainure additionnelle se raccorde à la rainure périphérique (9 ; 15) dans laquelle est engagée l'une des bordures d'extrémité de la pièce en T (14 ; 14').

4. Volant selon l'une quelconque des revendications 1 à 3, **caractérisé en ce que** ledit enrobage (8 ; 8') est en un seul élément, surmoulé sur ladite armature (7 ; 7').

5. Volant selon la revendication 4, **caractérisé en ce que** ledit enrobage (8 ; 8') est en mousse de polyuréthane.

6. Volant selon la revendication 5, **caractérisé en ce que** ledit enrobage est en thermoplastique injecté gaz.

7. Volant selon l'une quelconque des revendications 1 à 6, **caractérisé en ce que** deux bordures opposées (10, 11) du revêtement (6) sont engagées dans ladite rainure (9).

8. Volant selon l'une quelconque des revendications 1 à 7, **caractérisé en ce que** ledit enrobage (8') comporte une deuxième rainure (16) parallèle à ladite rainure (15), chacune des bordures opposées (10', 11') dudit revêtement (6') étant engagée dans une respective desdites première rainure (15) et deuxième rainure (16).

9. Volant selon la revendication 8, **caractérisé en ce qu'**il comporte un profilé (17) à section en U, dont l'une (18) des ailes latérales est engagée, avec l'une (10') desdites bordures opposées, dans la première rainure (15), dont l'autre aile latérale (19) est engagée, avec l'autre (11') desdites bordures opposées, dans la deuxième rainure (16), et dont l'aile centrale (20) est à cheval entre lesdites première rainure (15) et deuxième rainure (16).

10. Volant selon la revendication 9, **caractérisé en ce que** la surface externe de l'aile centrale (20) du profilé (17) est à fleur de la surface externe du revêtement (6').

11. Volant selon l'une quelconque des revendications 9 ou 10, **caractérisé en ce qu'**il comporte des moyens électriques (23-25) disposés entre ledit profilé (17) et ledit enrobage (8').

12. Volant selon la revendication 11, **caractérisé en ce que** lesdits moyens électriques (23-25) comportent au moins une source lumineuse (24), l'aile centrale comportant en conséquence au moins une portion perméable à la lumière.

13. Volant selon l'une quelconque des revendications 11 ou 12, **caractérisé en ce que** lesdits moyens électriques (23-25) comportent au moins un moyen (25) d'établissement de contact.

14. Volant selon l'une quelconque des revendications 11 à 13, **caractérisé en ce que** ledit enrobage (8') présente, entre lesdites première rainure (15) et deuxième rainure (16), sur au moins une longueur périphérique prédéterminée, une surface externe en creux par rapport au reste de la surface externe de l'enrobage (8'), afin de ménager, entre ledit enrobage et ledit profilé, un espace (22) où loger des dits moyens électriques (23-25).

15. Volant selon l'une quelconque des revendications 1 à 14, **caractérisé en ce qu'**au moins une dite rainure (9 ; 15, 16) est issue de moulage.

16. Volant l'une quelconque des revendications 1 à 15, **caractérisé en ce qu'**au moins une dite rainure est réalisée en reprise d'usinage après moulage dudit enrobage (8 ; 8').

17. Volant selon l'une quelconque des revendications 1 à 16, **caractérisé en ce que** ledit revêtement (6 ; 6') est collé sur ledit enrobage (8 ; 8').

## Claims

1. A vehicle steering wheel (1), comprising a rim (2 ; 2') formed by a core (7 ; 7'), by a lining (8 ; 8') around said core (7 ; 7') and by a covering (6 ; 6') of leather or the like which covers said lining (8 ; 8'), the lining comprising a one-piece member (8 ; 8') in which a peripheral groove (9 ; 15, 16) is formed in which there is engaged a longitudinal edge (10, 11 ; 10', 11') of said covering (6 ; 6'), **characterized in that** said lining (8 ; 8') around the core (7 ; 7') of the rim (2 ; 2') is continued on the branches (3 ; 3') which said steering wheel (1) comprises, by a lining (8 ; 8') around the core (7 ; 7') of said branches (3 ; 3'), while said covering (6 ; 6') comprises pieces (14 ; 14') for covering the lining (8 ; 8') of each said branch (3 ; 3') also.

2. A steering wheel according to claim 1, **characterized in that** said covering comprises, on at least one said branch (3 ; 3') a T-shaped piece (14 ; 14') of which one of the end edges is engaged in a said peripheral groove (12 ; 12') while at least one other end edge is engaged in an additional groove formed in the lining of the rim and in the lining of said branch.

3. A steering wheel according to claim 2, **characterized in that** said additional groove is joined to the peripheral groove (9 ; 15) in which one of the end edges of the T-shaped piece (14 ; 14') is engaged.

4. A steering wheel according to any one of claims 1 to 3, **characterized in that** said lining (8 ; 8') is a single member molded onto said core (7 ; 7').

5. A steering wheel according to claim 4, **characterized in that** said lining (8 ; 8') is of polyurethane foam.

6. A steering wheel according to claim 5, **characterized in that** said lining is of gas-assisted injection molded thermoplastic.

7. A steering wheel according to any one of claims 1 to 6, **characterized in that** two opposite edges (10, 11) of said covering (6) are engaged in said groove (9).

8. A steering wheel according to any one of claims 1 to 7,
**characterized in that** said lining (8') comprises a second groove (16) parallel to said groove (15), each of the opposite edges (10', 11') of said covering (6') being engaged in a respective one of said first groove (15) and second groove (16).

9. A steering wheel according to claim 8, **characterized in that** it comprises a profile member (17) with a U-section, of which one (18) of the side portions is engaged, together with one (10') of said opposite edges, in the first groove (15), of which the other side portion (19) is engaged, together with the other (11') of said opposite edges, in the second groove (16) and of which the central portion (20) extends between said first groove (15) and second groove (16).

10. A steering wheel according to claim 9, **characterized in that** the external surface of the central portion (20) of the profile member (17) is level with the external surface of the covering (6').

11. A steering wheel according to any one of claims 9 or 10, **characterized in that** it comprises electrical means (23-25) disposed between said profile member (17) and said lining (8').

12. A steering wheel according to claim 11, **characterized in that** said electrical means (23-25) comprise at least one light source (24), the central portion consequently comprising at least one light permeable portion.

13. A steering wheel according to any one of claims 11 or 12, **characterized in that** said electrical means (23-25) comprise at least one means (25) for making electrical contact.

14. A steering wheel according to any one of claims 11 to 13, **characterized in that** said lining (8') has, between said first groove (15) and second groove (16), over at least a predetermined peripheral length, an external surface that is recessed with respect to the rest of the external surface of the lining (8'), in order to provide, between said lining and said profile member, a space (22) in which to house said electrical means (23-25).

15. A steering wheel according to any one of claims 1 to 14, **characterized in that** at least one said groove (9 ; 15, 16) is formed by molding.

16. A steering wheel according to any one of claims 1, to 15, **characterized in that** at least one said groove is formed by finish-off machining after molding said lining (8 ; 8').

17. A steering wheel according to any one of claims 1 to 16, **characterized in that** said covering (6 ; 6') is adhesively bonded onto said lining (8 ; 8').

## Patentansprüche

1. Fahrzeuglenkrad (1), das einen Kranz (2; 2') umfasst, der durch einen Kern (7; 7'), durch eine Umhüllung (8; 8') des Kerns (7, 7') und durch einen Überzug (6; 6') aus Leder oder dergleichen, mit dem die Umhüllung (8, 8') bezogen ist, gebildet ist, wobei die Umhüllung ein einteiliges Element (8; 8') umfasst, in dem eine Umfangsnut (9; 15, 16) ausgebildet ist, mit der eine longitudinale Kante (10, 11; 10', 11') des Überzugs (6, 6') in Eingriff ist, **dadurch gekennzeichnet, dass** die Umhüllung (8; 8') des Kerns (7; 7') des Kranzes (2; 2') auf Höhe der Speichen (3; 3'), die das Lenkrad (1) aufweist, durch eine Umhüllung (8, 8') des Kerns (7, 7') der Speichen (3, 3') verlängert ist, während der Überzug (6, 6') Teile (14; 14') umfasst, mit der auch die Umhüllung (8, 8') jeder Speiche (3; 3') bezogen ist.

2. Lenkrad nach Anspruch 1, **dadurch gekennzeichnet, dass** der Überzug auf Höhe wenigstens einer der Speichen (3; 3') ein T-förmiges Teil (14; 14') aufweist, wovon eine Endkante in einer Umfangsnut (12; 12') in Eingriff ist, während wenigstens eine weitere Endkante in einer zusätzlichen Nut in Eingriff ist, die in der Umhüllung des Kranzes und in der Umhüllung dieser Speiche ausgebildet ist.

3. Lenkrad nach Anspruch 2, **dadurch gekennzeichnet, dass** die zusätzliche Nut mit der Umfangsnut (9; 15), in der eine der Endkanten des T-förmigen Teils (14; 14') in Eingriff ist, verbunden ist.

4. Lenkrad nach einem der Ansprüche 1 bis 3, **dadurch gekennzeichnet, dass** die Umhüllung (8; 8') ein einziges Element ist, das auf den Kern (7; 7') gegossen ist.

5. Lenkrad nach Anspruch 4, **dadurch gekennzeichnet, dass** die Umhüllung (8; 8') aus Polyurethanschaum besteht.

6. Lenkrad nach Anspruch 5, **dadurch gekennzeichnet, dass** die Umhüllung ein thermoplastischer Werkstoff ist, in den Gas eingeleitet ist.

7. Lenkrad nach einem der Ansprüche 1 bis 6, **dadurch gekennzeichnet, dass** zwei gegenüberliegende Kanten (10, 11) des Überzugs (6) in der Nut (9) in Eingriff sind.

8. Lenkrad nach einem der Ansprüche 1 bis 7, **dadurch gekennzeichnet, dass** die Umhüllung (8') eine zu der Nut (15) parallele zweite Nut (16) umfasst, wobei jede der gegenüberliegenden Kanten (10', 11') des Überzugs (6') in der ersten Nut (15) bzw. in der zweiten Nut (16) in Eingriff ist.

9. Lenkrad nach Anspruch 8, **dadurch gekennzeichnet, dass** es ein Profil (17) mit U-förmigem Querschnitt aufweist, wovon einer (18) der seitlichen Schenkel zusammen mit einer (10') der gegenüberliegenden Kanten in der ersten Nut (15) in Eingriff ist und der andere seitliche Schenkel (19) zusammen mit der anderen (11') der gegenüberliegenden Kanten in der zweiten Nut (16) in Eingriff ist und wovon der Mittelteil (20) zwischen der ersten Nut (15) und der zweiten Nut (16) sitzt.

10. Lenkrad nach Anspruch 9, **dadurch gekennzeichnet, dass** die äußere Oberfläche des Mittelteils (20) des Profils (17) mit der äußeren Oberfläche des Überzugs (6') bündig ist.

11. Lenkrad nach einem der Ansprüche 9 oder 10, **dadurch gekennzeichnet, dass** es elektrische Mittel (23-25) umfasst, die zwischen dem Profil (17) und der Umhüllung (8') angeordnet sind.

12. Lenkrad nach Anspruch 11, **dadurch gekennzeichnet, dass** die elektrischen Mittel (23-25) wenigstens eine Lichtquelle (24) umfassen, weshalb der Mittelteil wenigstens einen lichtdurchlässigen Abschnitt umfasst.

13. Lenkrad nach einem der Ansprüche 11 oder 12, **dadurch gekennzeichnet, dass** die elektrischen Mittel (23-25) wenigstens ein Kontaktherstellungsmittel (25) umfassen.

14. Lenkrad nach einem der Ansprüche 11 bis 13, **dadurch gekennzeichnet, dass** die Umhüllung (8') zwischen der ersten Nut (15) und der zweiten Nut (16) wenigstens auf einer vorgegebenen Umfangslänge eine in Bezug auf die restliche äußere Oberfläche der Umhüllung (8') ausgehöhlte äußere Oberfläche aufweist, um zwischen der Umhüllung und dem Profil einen Raum (22) zu bilden, in dem die elektrischen Mittel (23-25) untergebracht sind.

15. Lenkrad nach einem der Ansprüche 1 bis 14, **dadurch gekennzeichnet, dass** wenigstens eine Nut (9; 15, 16) durch Gießformung geschaffen ist.

16. Lenkrad nach einem der Ansprüche 1 bis 15, **dadurch gekennzeichnet, dass** wenigstens eine Nut durch Aufnahme der Bearbeitung nach dem Formgießen der Umhüllung (8; 8') verwirklicht ist.

17. Lenkrad nach einem der Ansprüche 1 bis 16, **dadurch gekennzeichnet, dass** der Überzug (6; 6') auf die Umhüllung (8; 8') geklebt ist.
